# EUROPEAN PATENT APPLICATION

(11) **EP 4 394 652 A1**
(43) Date of publication of application: **03.07.2024**
(21) Application number: 23219472.0
(22) Date of filing: 21.12.2023
(51) Int. Cl.: G06F 40/47, G06F 40/51, G06F 40/58, G10L 15/00

(54) **TRANSLATION ENGINE EVALUATION SYSTEM AND TRANSLATION ENGINE EVALUATION METHOD**

(30) Priority: 27.12.2022 JP 2022210307
(71) Applicant: Pocketalk Corporation, Tokyo 105-7133 (JP)
(72) Inventor: KAWATAKE, Hajime, Tokyo, 105-7133 (JP)
(74) Representative: EIP

(57) **Abstract**

A translation engine evaluation system (1) includes a parallel translation list display control unit (120) that displays a list of parallel translations, in which the pre-translation text and the post-translation text are associated with each other, on the terminal (100), a parallel translation list selection receiving unit (122) that receives a selection of a parallel translation from the plurality of parallel translations included in the list, a comparative translation unit (218) that causes an alternative translation engine to translate the pre-translation text included in the selected parallel translation into the second language to generate a comparative post-translation text, a comparative translation list display control unit (130) that displays the comparative post-translation text on the terminal (100), and an individual evaluation information obtaining unit (210) that obtains individual evaluation information indicating evaluation of a user of the terminal (100) on the comparative post-translation text.

## Description

### BACKGROUND OF THE INVENTION

### 1. Field of the Invention

The present disclosure relates to a translation engine evaluation system and a translation engine evaluation method.

### 2. Description of the Related Art

WO2019-111346A describes the server that receives speech data from a terminal, translates a text that is a speech recognition result of the speech indicated by the speech data into a text in another language, and transmits the text representing the translation result and the speech represented by the text to the terminal.

In a situation where the server described in WO2019-111346A executes translation using the specific translation engine, the translation result obtained by the translation engine may not suit the user's preference. For example, the translation results from the newly developed translation engine may be more suited to the user's preferences.

However, the technique described in WO2019-111346A is unable to find out if the translation engine used for the translation suits the user's preference.

### SUMMARY OF THE INVENTION

One or more embodiments of the present invention have been conceived in view of the above, and an object thereof is to provide a translation engine evaluation system and a translation engine evaluation method enabling a user to know whether a translation engine used for translation matches a user's preference.

In order to solve the above described problems, a translation engine evaluation system according to the present invention includes default translation means for causing a default translation engine to translate a pre-translation text into a second language to generate a post-translation text, the pre-translation text representing a speech in a first language entered in a terminal, post-translation text display control means for displaying the post-translation text on the terminal, parallel translation list display control means for displaying a list of parallel translations, in which the pre-translation text and the post-translation text are associated with each other, on the terminal, selection receiving means for receiving a selection of a parallel translation from the plurality of parallel translations included in the list, comparative translation means for causing an alternative translation engine to translate the pre-translation text included in the selected parallel translation into the second language to generate a comparative post-translation text; comparative post-translation text display control means for displaying the comparative post-translation text on the terminal, and individual evaluation information obtaining means for obtaining individual evaluation information indicating evaluation of a user of the terminal on the comparative post-translation text.

In one aspect of the present invention, upon receiving the selection, the comparative translation means causes the alternative translation engine to generate the comparative post-translation text.

In one aspect of the present invention, the comparative translation means causes each of the plurality of alternative translation engines to generate the comparative post-translation text, and the comparative post-translation text display control means displays a list, in which the plurality of comparative post-translation texts that are respectively generated by the plurality of alternative translation engines are randomly arranged, on the terminal.

In one aspect of the present invention, the comparative translation means causes the alternative translation engine that is randomly selected from the plurality of alternative translation engines to generate the comparative post-translation text.

In one aspect of the present invention, the default translation engine translates the pre-translation text into the second language to generate the post-translation text for each of the plurality of terminals, the pre-translation text indicating a speech in the first language entered in the terminal, and the translation engine evaluation system further includes default translation engine changing means for changing the default translation engine.

In one aspect of the present invention, the translation engine evaluation system further includes alternative translation engine setting means for executing at least one of adding, changing, or deleting the alternative translation engine.

In one aspect of the present invention, the translation engine evaluation system further includes overall evaluation information generating means for generating overall evaluation information based on the individual evaluation information related to each of the plurality of terminals.

A translation engine evaluation method according to the present invention includes causing a default translation engine to translate a pre-translation text into a second language to generate a post-translation text, the pre-translation text representing a speech in a first language entered in a terminal, displaying the post-translation text on the terminal, displaying a list of parallel translations, in which the pre-translation text and the post-translation text are associated with each other, on the terminal, receiving a selection of a parallel translation from the plurality of parallel translations included in the list, causing an alternative translation engine to translate the pre-translation text included in the selected parallel translation into the second language to generate a comparative post-translation text, displaying the comparative post-translation text on the terminal, and obtaining individual evaluation information indicating evaluation of a user of the terminal on the comparative post-translation text.

### BRIEF DESCRIPTION OF THE DRAWINGS

FIG. 1 is a diagram illustrating an overall configuration of a translation engine evaluation system according to an embodiment of the present invention;
FIG. 2 is a diagram illustrating an example of an external view of a terminal according to an embodiment of the present invention;
FIG. 3 is a diagram illustrating an example of a parallel translation list display screen;
FIG. 4 is a diagram illustrating an example of a parallel translation confirmation screen;
FIG. 5 is a diagram illustrating an example of a comparative translation list display screen;
FIG. 6 is a diagram illustrating an example of an overall evaluation information display screen;
FIG. 7A is a diagram illustrating an example of a hardware configuration of a terminal according to an embodiment of the present invention;
FIG. 7B is a diagram illustrating an example of a hardware configuration of a translation portal according to an embodiment of the present invention;
FIG. 8 is a functional block diagram of the translation engine evaluation system according to an embodiment of the present invention;
FIG. 9 is a detailed functional block diagram related to a normal operation of the terminal according to an embodiment of the present invention;
FIG. 10 is a diagram illustrating an example of parallel translation list data;
FIG. 11 is a detailed functional block diagram related to a normal operation of the translation portal according to an embodiment of the present invention;
FIG. 12 is a detailed functional block diagram of the speech processing system according to an embodiment of the present invention;
FIG. 13 is a detailed functional block diagram related to evaluation operation of the terminal according to an embodiment of the present invention;
FIG. 14 is a detailed functional block diagram related to evaluation operation of the translation portal according to an embodiment of the present invention;
FIG. 15 is a diagram illustrating an example of overall evaluation information data;
FIG. 16 is a flow chart showing processing for generating the parallel translation list of the translation engine evaluation system;
FIG. 17 is a flow chart showing processing for generating a comparative translation list of the translation engine evaluation system;
FIG. 18 is a flow chart showing processing for generating the overall evaluation information of the translation engine evaluation system; and
FIG. 19 is a diagram illustrating a comparative post-translation text display screen, which is a variation of the comparative translation list display screen.

### DETAILED DESCRIPTION OF THE INVENTION

An embodiment of the present invention will be described below with reference to the accompanying drawings.

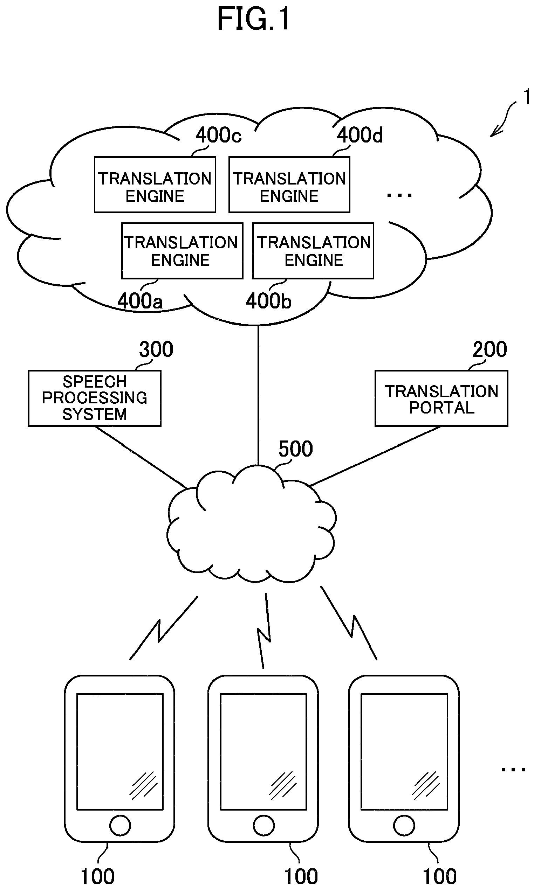

FIG. 1 is a diagram illustrating an example of an overall configuration of a translation engine evaluation system 1 according to the present embodiment.

As shown in FIG. 1, the translation engine evaluation system 1 according to the present embodiment includes a plurality of terminals 100, a translation portal 200, a speech processing system 300, and a plurality of translation engines 400 (400a, 400b, 400c, 400d...). The terminals 100, the translation portal 200, the speech processing system 300, and the translation engines 400 are connected to a computer network 500, such as the Internet. The terminal 100, the translation portal 200, the speech processing system 300, and the translation engine 400 can communicate with each other via the computer network 500. The terminals 100 may be used by different users.

In the following, the translation engine 400a is also referred to as a translation engine A, and the identifier thereof is "0001." The translation engine 400b is also referred to as a translation engine B, and the identifier thereof is "0002." The translation engine 400c is also referred to as a translation engine C, and the identifier thereof is "0003." The translation engine 400d is also referred to as a translation engine D, and the identifier thereof is "0004."

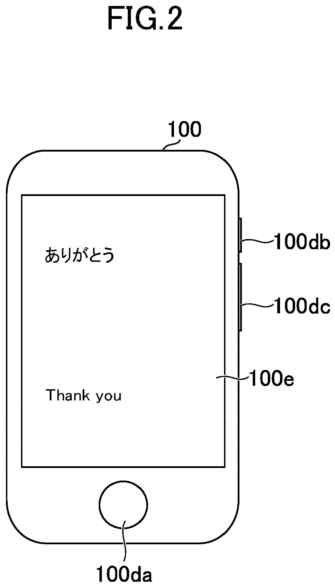

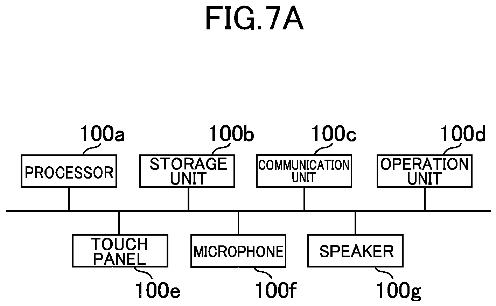

FIG. 2 is a diagram illustrating an example of an appearance of the terminal viewed from the front according to an embodiment of the present invention. The terminal 100 according to the present embodiment is a translator. FIG. 2 shows a translation button 100da that is pressed when a speech to be translated is entered, a power button 100db for turning on/off the power supply, and a volume adjusting unit 100dc for adjusting the volume of the speech that is output from a speaker 100g (see FIG. 7A) not shown in FIG. 2. The translation button 100da is disposed below a touch panel 100e provided on the front surface of the terminal 100. The power button 100db and the volume adjusting unit 100dc are disposed on the right side of the terminal 100. The user operates the terminal 10 to previously set a pre-translation language, which is a language of a speech entered into the terminal 10, and a post-translation language, which is a language to which the speech is translated. In the following, assume that Japanese is set as the pre-translation language and English is set as the post-translation language.

When the user inputs Japanese speech to the terminal 100, the pre-translation Japanese text, which is a speech recognition result, and the post-translation English text, which is obtained by translating the pre-translation Japanese text into English, are displayed on the touch panel 100e as shown in FIG. 2, and the English speech representing the content of the English text is output. This series of operations is called a normal operation. The translation engine used in the normal operation is common to the terminals included in the translation engine evaluation system 1, and such a translation engine is called a default translation engine. In the present embodiment, assume that the default translation engine generates, for any of the terminals 100, English text obtained by translating Japanese text, which represents entered Japanese speech, into English. The default translation engine may be changed, and evaluation operation described below can determine which translation engine is to be changed. In the following description, the translation engine A is referred to as a default translation engine.

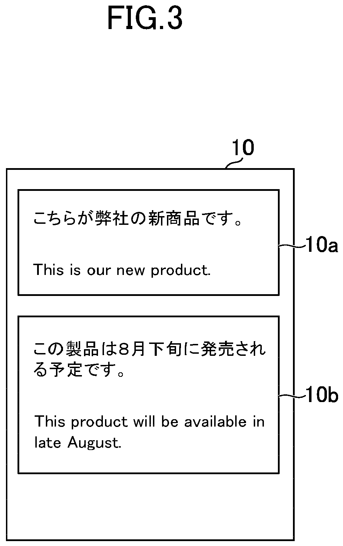

FIG. 3 is a diagram illustrating an example of a parallel translation list display screen displayed in the evaluation operation. With the normal operation, the Japanese text and the English text obtained by translating the Japanese text are associated with each other and stored in the terminal 100 as a parallel translation. The terminal 100 generates a parallel translation list display screen 10 based on the stored parallel translation. The parallel translation list display screen 10 includes parallel translation display areas 10a to 10b. The terminal 100 displays the parallel translation list display screen 10 of FIG. 3 on the touch panel 100e. The evaluation operation is performed using the parallel translation list generated by the normal operation.

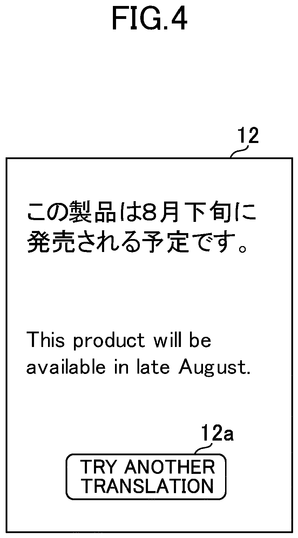

The user selects one parallel translation from the parallel translation list displayed when a predetermined operation is performed on the terminal 100, thereby participating in the evaluation of the translation engine. When the user selects a parallel translation, the screen shown in FIG. 4 to be described next is displayed on the touch panel 100e.

FIG. 4 is a diagram illustrating an example of a parallel translation confirmation screen displayed in the evaluation operation. The parallel translation confirmation screen 12 includes the parallel translation selected by the user on the screen in FIG. 3 and a parallel translation confirmation receiving button 12a for a user to try other translations. The user selects the parallel translation confirmation receiving button 12a to check the English text obtained by translating the Japanese text related to the selected parallel translation into English using the translation engine other than the default translation engine.

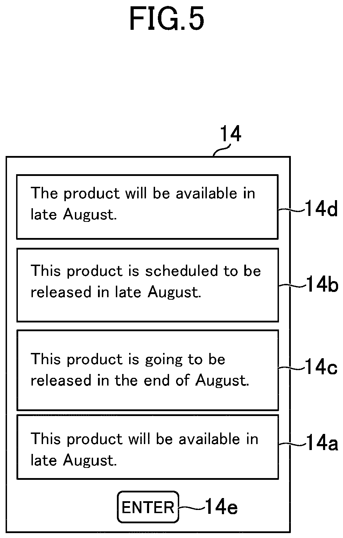

FIG. 5 is a diagram illustrating an example of a comparative translation list display screen displayed in the evaluation operation. The comparative translation list display screen 14 includes the English text obtained by translating a Japanese text selected by the user on the screen in FIG. 4 by the default translation engine and the English texts obtained by translating the Japanese text by the plurality of other translation engines. The English texts displayed on the comparative translation list display screen 14 is referred to as comparative translation texts 14a to 14d. The comparative translation text 14a is obtained by translating the Japanese text by the translation engine A. The comparative translation text 14b is obtained by translating the Japanese text by the translation engine B. The comparative translation text 14c is obtained by translating the Japanese text by the translation engine C. The comparative translation text 14d is obtained by translating the Japanese text by the translation engine D. The comparative translation texts 14a to 14d are randomly disposed from the top on the comparative translation list display screen 14. For example, FIG. 5 shows the comparative translation texts 14d, 14b, 14c, and 14a arranged in this order. The translation engines are provided by different providers, and thus the translation algorithms are also different. As such, the same Japanese text is translated into English texts that are slightly different.

A translation engine other than the default translation engine is referred to as an alternative translation engine. That is, the translation engine B, the translation engine C, and the translation engine D are alternative translation engines.

The user can select one English text, which is a translation result suited to the user's preference, from the comparative translation list. The user selects one text from the comparative translation list by a selection operation, such as a tap on the comparative translation texts 14a to 14d, and taps a comparative translation text selection receiving button 14e. The terminal 100 then generates a selection result of the user as individual evaluation information, and sends the individual evaluation information to the translation portal 200. The translation portal 200 obtains the individual evaluation information from the terminals 100 included in the translation engine evaluation system 1, and generates overall evaluation information. In this manner, the overall evaluation information of the translation engine that reflects the user's preference can be generated.

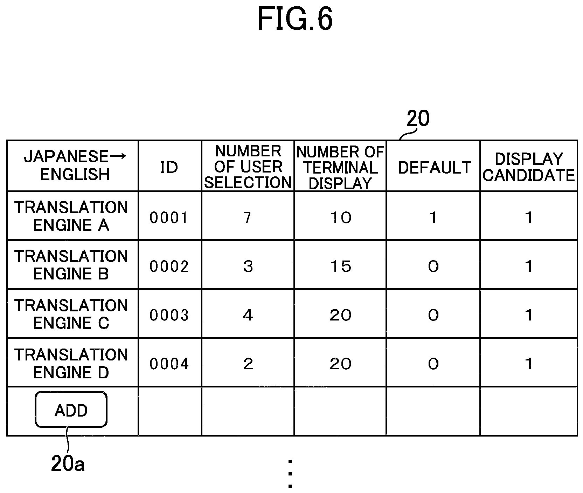

FIG. 6 is a diagram illustrating an example of an overall evaluation information display screen to be checked by a system administrator. The translation portal 200 generates overall evaluation information of the default translation engine and the alternative translation engine based on the individual evaluation information obtained by the evaluation operation described above. FIG. 6 is an example of an overall evaluation information management screen 20 of the translation engine that translates Japanese into English. For each translation engine, information on ID, number of user selections, number of terminal displays, defaults, and display candidates are associated with one another and displayed. The administrator of the translation engine evaluation system 1 sees the overall evaluation information management screen 20 generated by the translation portal 200, thereby checking the evaluation status of the default translation engine and the alternative translation engine and determining whether to change the default translation engine.

In this manner, according to the present embodiment, the administrator can know whether the default translation engine used for the translation in the normal operation matches the user's preference. The administrator can also determine whether to change the default translation engine and to change which alternative translation engine to the default translation engine.

A hardware configuration for implementing the translation engine evaluation system 1 will be described.

FIG. 7A is a diagram illustrating an example of the hardware configuration of the terminal 100 according to an embodiment of the present invention. The terminal 100 according to the present embodiment is a computer as shown in FIG. 7A. The software installed in the computer implements a translation function for displaying the Japanese text representing the entered Japanese speech and the English text obtained by translating the Japanese text and outputting the speech obtained by speech-synthesizing the English text. As shown in the example of FIG. 7A, the terminal 100 of the present embodiment includes a processor 100a, a storage unit 100b, a communication unit 100c, an operation unit 100d, a touch panel 100e, a microphone 100f, and a speaker 100g.

The processor 100a is, for example, a program control device, such as a microprocessor, operating in accordance with a program installed in the terminal 100.

The storage unit 100b is, for example, a storage element such as a ROM and a RAM. The storage unit 100b stores a program to be executed by the processor 100a.

The communication unit 100c is a communication interface for exchanging data with the speech processing system 300 via the computer network 500, for example. The communication unit 100c may include a wireless communication module that communicates with the computer network 500, such as the Internet, through a mobile telephone line including a base station. The communication unit 100c may also include a wireless LAN module for communicating with the computer network 500, such as the Internet, via a Wi-Fi (registered trademark) router, for example.

The operation unit 100d is an operation member, such as a button and a touch sensor, for outputting an operation performed by the user to the processor 100a, for example.

The touch panel 100e is formed by integrating a touch sensor and a display, such as a liquid crystal display and an organic EL display. The touch panel 100e is provided on the front surface of the terminal 100, and displays a screen generated by the processor 100a, for example.

The microphone 100f is, for example, a speech input device that converts the received speech into an electric signal. The microphone 100f may be a dual microphone that is built in the terminal 100 and has a noise canceling function for easy recognition of human voices even in crowded places.

The speaker 100g is an audio output device that outputs speech, for example. The speaker 100g may be a dynamic speaker that is built in the terminal 100 and usable in a noisy place.

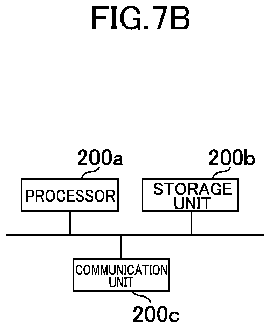

As shown in FIG. 7B, the translation portal 200 according to the present embodiment includes a processor 200a, a storage unit 200b, and a communication unit 200c, for example. In the present embodiment, for example, the translation portal 200 is a computer system, such as a server computer, that relays speech data representing a speech entered into the terminal 100, a pre-translation text (Japanese text) representing a speech recognition result of the speech, a post-translation text (English text) representing a translation result of the speech, and English speech data obtained by speech synthesis of the post-translation text.

The processor 200a is, for example, a program control device such as a CPU that operates according to a program installed in the translation portal 200.

The storage unit 200b is, for example, a storage element, such as a ROM and a RAM, a solid state drive, and a hard disk drive. The storage unit 200b stores a program to be executed by the processor 200a.

The communication unit 200c is a communication interface, such as a network board. The communication unit 200c transmits and receives data to and from the terminal 100, the speech processing system 300, and the translation engine 400 via the computer network 500, for example.

The speech processing system 300 is, for example, a computer system, such as a server computer that executes speech recognition of speech represented by speech data received by a terminal 100 and speech processing, such as speech synthesis of translation text. The speech processing system 300 may be composed of one computer or a plurality of computers.

The translation engine 400 is a computer system, such as a server computer, that executes processing for translating a text in a first language into a text in a second language. For example, in the present embodiment, a text in Japanese, which is the first language, is translated into a text in English, which is the second language. The translation engine 400 may be composed of one computer or a plurality of computers. The translation engine A, the translation engine B, the translation engine C, and the translation engine D may be provided by different providers.

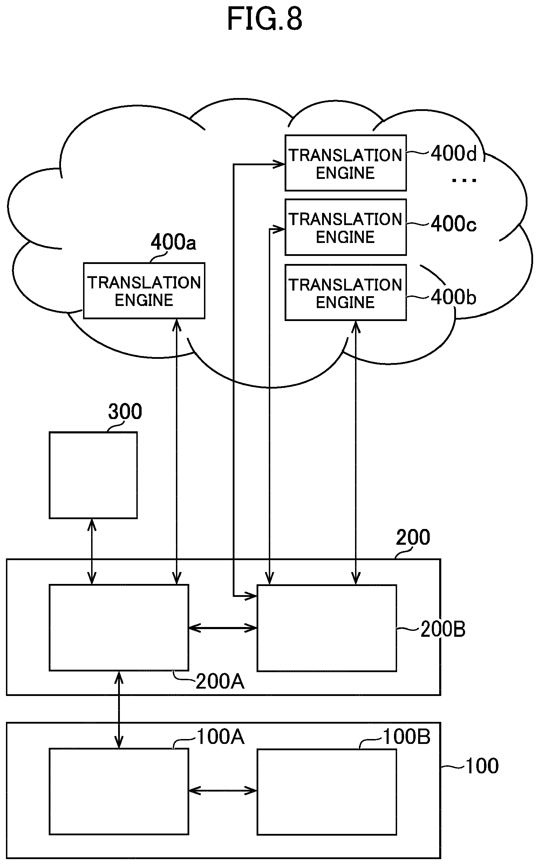

FIG. 8 is a functional block diagram of the translation engine evaluation system 1 according to the embodiment of the present invention. The translation engine evaluation system 1 mainly executes the normal operation and the evaluation operation.

As shown in FIG. 8, the terminal 100 includes a terminal normal operation unit 100A and a terminal evaluation operation unit 100B, and the translation portal 200 includes a portal normal operation unit 200A and a portal evaluation operation unit 200B.

The normal operation is executed by the terminal normal operation unit 100A, the portal normal operation unit 200A, the speech processing system 300, and the translation engine A, which is a default. In the following, the processing of the normal operation will be described.

When the user enters a Japanese speech into the terminal normal operation unit 100A, the Japanese speech data is transmitted to the portal normal operation unit 200A. The portal normal operation unit 200A transmits the received Japanese speech data to the speech processing system 300.

The speech processing system 300 applies speech recognition to the received speech data and generates a Japanese text (pre-translation text), which is a speech recognition result. The speech processing system 300 then transmits the Japanese text to the portal normal operation unit 200A.

The portal normal operation unit 200A transmits the received Japanese text to the translation engine A, which is the default translation engine. The translation engine A translates the received Japanese text and generates an English text. The translation engine A transmits the English text to the portal normal operation unit 200A. The portal normal operation unit 200A transmits the English text to the speech processing system 300.

The speech processing system 300 speech synthesizes the English text and generates an English speech representing the content of the English text. Further, the speech processing system 300 transmits the English speech to the portal normal operation unit 200A.

The portal normal operation unit 200A then transmits the Japanese text, the English text, and the English speech data to the terminal normal operation unit 100A.

As shown in FIG. 2, the terminal normal operation unit 100A displays the Japanese text and the English text, and outputs the English speech. Further, the terminal normal operation unit 100A stores the Japanese text and the English text in association with each other as a parallel translation.

The evaluation operation is executed by the terminal evaluation operation unit 100B, the portal evaluation operation unit 200B, the translation engine B, the translation engine C, and the translation engine D. In the following, processing of the evaluation operation will be described.

With the normal operation, the Japanese text and the English text are stored in the terminal normal operation unit 100A as the parallel translation.

When the user performs a predetermined operation, the terminal evaluation operation unit 100B displays a parallel translation list as shown in FIG. 3. The parallel translation list display screen 10 is generated by arranging different parallel translations in the parallel translation display areas 10a and 10b.

The user selects one parallel translation from the parallel translation list displayed on the terminal evaluation operation unit 100B. As shown in FIG. 4, the terminal evaluation operation unit 100B then displays the parallel translation confirmation screen 12 in which the parallel translation selected by the user and the parallel translation confirmation receiving button 12a are displayed. When the user selects the parallel translation confirmation receiving button 12a, the terminal evaluation operation unit 100B transmits the Japanese text related to the parallel translation to the portal evaluation operation unit 200B.

Subsequently, the portal evaluation operation unit 200B transmits the Japanese text to the translation engine B, the translation engine C, and the translation engine D, which are the alternative translation engines. The alternative translation engines B to D transmit a comparative post-translation text, which is obtained by translating the Japanese text into English, to the portal evaluation operation unit 200B.

The portal evaluation operation unit 200B transmits the received plurality of comparative post-translation texts to the terminal evaluation operation unit 100B.

The terminal evaluation operation unit 100B disposes the received comparative post-translation texts (English texts) and pre-translation texts (Japanese texts) in the parallel translation display areas 14a to 14d, thereby displaying the comparative translation list display screen 14 as shown in FIG. 5.

The user then selects one English text having the translation result suited to the user's preference and selects the comparative translation text selection receiving button 14e, and the terminal evaluation operation unit 100B generates the selection result of the user as individual evaluation information. For example, the ID of the displayed translation engine and the ID of the selected translation engine may be individual evaluation information. The terminal evaluation operation unit 100B then transmits the individual evaluation information to the portal evaluation operation unit 200B.

The portal evaluation operation unit 200B obtains the individual evaluation information from the terminal evaluation operation units 100B included in the translation engine evaluation system 1 and generates and stores overall evaluation information of the default translation engine and the alternative translation engines.

As shown in FIG. 6, the portal evaluation operation unit 200B displays the overall evaluation information display screen to be checked by the administrator of the translation engine evaluation system 1. The administrator sees the overall evaluation information display screen to check the evaluation status of the translation engine A, which is the default translation engine, and the translation engines B, C and D, which are the alternative translation engines.

In this manner, according to the present embodiment, the administrator can know whether the default translation engine used for the translation in the normal operation matches the user's preference. The administrator can also determine whether to change the default translation engine and to change which alternative translation engine to the default translation engine.

Next, the terminal normal operation unit 100A, the terminal evaluation operation unit 100B, the portal normal operation unit 200A, the portal evaluation operation unit 200B, and the speech processing system 300 as shown in FIG. 8 will be described.

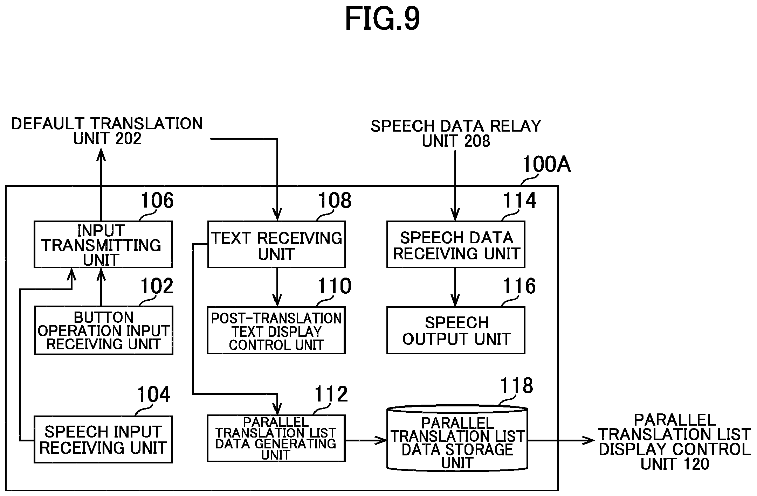

FIG. 9 is a detailed functional block diagram of the terminal normal operation unit 100A according to the present embodiment.

As shown in FIG. 9, the terminal normal operation unit 100A according to the present embodiment functionally includes, for example, a button operation input receiving unit 102, a speech input receiving unit 104, an input transmitting unit 106, a text receiving unit 108, a parallel translation list data generating unit 112, a speech data receiving unit 114, a speech output unit 116, and a parallel translation list data storage unit 118. The button operation input receiving unit 102 is implemented mainly by the processor 100a, the operation unit 100d, and the touch panel 100e. The speech input receiving unit 104 is mainly implemented by the processor 100a and the microphone 100f. The input transmitting unit 106, the text receiving unit 108, and the speech data receiving unit 114 are mainly implemented by the communication unit 100c. The parallel translation list data generating unit 112 is mainly implemented by the processor 100a and the touch panel 100e. The parallel translation listing data storage unit 118 is mainly implemented by the storage unit 100b.

The functions described above are implemented when the processor 100a executes a program that is installed in the user terminal 100, which is a computer, and includes commands corresponding to the above functions. The program is supplied to the user terminal 100 via a computer-readable information storage medium, such as an optical disk, a magnetic disk, a magnetic tape, and a magneto-optical disk, or the Internet.

In the present embodiment, for example, the button operation input receiving unit 102 receives an operation input to the terminal normal operation unit 100A, such as an operation of the user to press the translation button 100da with a finger and an operation of the user to release the finger from the translation button 100da.

For example, the speech input receiving unit 104 in the present embodiment receives a speech entered by the user via the microphone 100f while the translation button 100da of the button operation input receiving unit 102 is pressed.

In the present embodiment, for example, the input transmitting unit 106 transmits speech data representing a speech entered in the speech input receiving unit 104 to a default translation unit 202, which will be described later, of the portal normal operation unit 200A.

The text receiving unit 108 transmits the Japanese text and the English text received from the default translation unit 202, which will be described later, of the portal normal operation unit 200A to the post-translation text display control unit 110.

As shown in FIG. 2, the post-translation text display control unit 110 displays the Japanese text as the pre-translation text and the English text as the post-translation text on the touch panel 100e of the terminal 100.

The parallel translation list data generating unit 112 generates parallel translation list data based on the Japanese text and the English text received by the text receiving unit 108, and stores the parallel translation list data in the parallel translation list data storage unit 118.

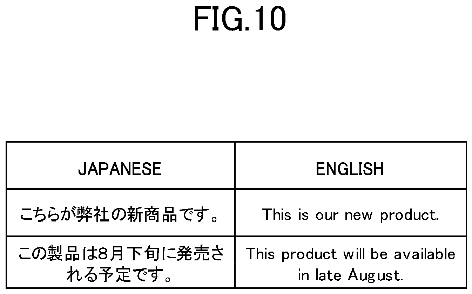

As shown in FIG. 10, the parallel translation list data is obtained by accumulating parallel translations of Japanese texts and English texts. Each time the normal operation is performed, a new parallel translation is added and the translation list data is updated.

The speech data receiving unit 114 receives data from a speech data relay unit 208, which will be described later, of the portal normal operation unit 200A.

The speech output unit 116 causes the speaker 100g to output the speech represented by the post-translation speech data received by the speech data receiving unit 114.

The parallel translation list data storage unit 118 stores parallel translation list data generated by the parallel translation list data generating unit 112.

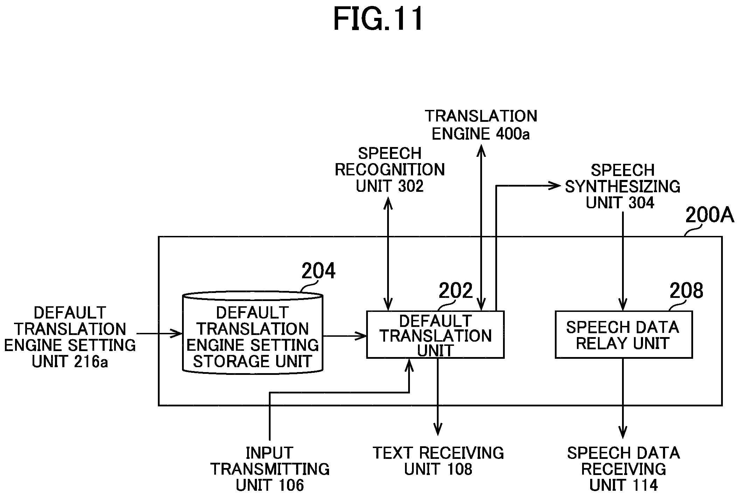

Next, referring to FIG. 11, the portal normal operation unit 200A related to the translation portal 200 will be described. FIG. 11 is a detailed functional block diagram of the portal normal operation unit 200A according to the present embodiment.

As shown in FIG. 11, the portal normal operation unit 200A according to the present embodiment functionally includes a default translation unit 202, a default translation engine setting storage unit 204, and a speech data relay unit 208, for example. The default translation unit 202 and the speech data relay unit 208 are mainly implemented by the communication unit 200c. The default translation engine setting storage unit 204 mainly implemented by the storage unit 200b.

The above-described functions are implemented by executing, on the processor 200a, a program that is installed in the translation portal 200, which is a computer, and includes instructions corresponding to the above-described functions. The program is supplied to the user translation portal 200 via a computer-readable information storage medium, such as an optical disk, a magnetic disk, a magnetic tape, a magneto-optical disk, and a flash memory, or the Internet.

The default translation engine setting storage unit 204 stores the settings of the default translation engine used in the normal operation.

In this embodiment, for example, the default translation unit 202 receives speech data from the input transmitting unit 106 of the terminal normal operation unit 100A. The default translation unit 202 transmits the received speech data to a speech recognition unit 302, which will be described later, of the speech processing system 300. For example, the default translation unit 202 receives a packet of streamed speech data transmitted from the input transmitting unit 106 and transmits the packet to the speech recognition unit 302 of the speech processing system 300.

In the present embodiment, for example, the default translation unit 202 transmits the received Japanese text to the translation engine A based on the default translation engine setting stored in the default translation engine setting storage unit 204. That is, the default translation unit 202 causes the translation engine A, which is the default translation engine, to generate an English text obtained by translating the Japanese text representing the Japanese speech entered in the terminal 100 into English.

In the present embodiment, for example, the default translation unit 202 transmits the English text received from the translation engine A to a speech synthesizing unit 304, which will be described later, of the speech processing system 300.

Further, the default translation unit 202 transmits the Japanese text, which is the pre-translation text, and the English text, which is the post-translation text, to the text receiving unit 108 of the terminal normal operation unit 100A.

The speech data relay unit 208 transmits the post-translation speech data received from the speech synthesizing unit 304, which will be described later, of the speech processing system 300 to the speech data receiving unit 114 of the terminal normal operation unit 100A.

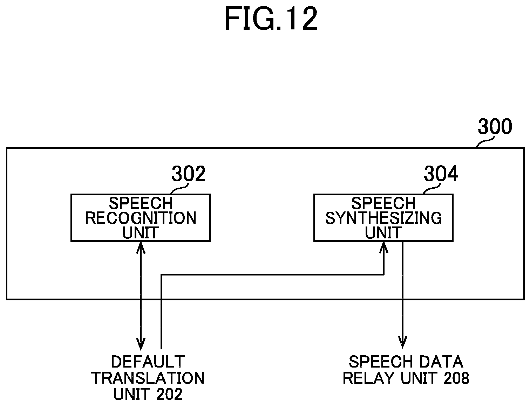

FIG. 12 is a detailed functional block diagram of the speech processing system 300 according to the present embodiment.

As shown in FIG. 12, the speech processing system 300 according to the present embodiment functionally includes the speech recognition unit 302 and the speech synthesizing unit 304, for example.

In the present embodiment, the speech recognition unit 302 of the speech processing system 300 receives, for example, a packet of speech data transmitted from the default translation unit 202 of the portal normal operation unit 200A.

In the present embodiment, the speech recognition unit 302 of the speech processing system 300 executes speech recognition processing on the speech indicated by the received speech data, and generates a speech recognition result text representing the recognition result of the speech. The speech recognition result text represents a pre-translation speech, and in the present embodiment, is a Japanese text.

In the present embodiment, for example, the speech synthesizing unit 304 may execute speech synthesizing processing to synthesize a post-translation speech, which is a speech representing the received English text.

Further, the speech synthesizing unit 304 may transmit the post-translation speech to the speech data relay unit 208 of the portal normal operation unit 200A.

Next, an evaluation operation using the parallel translation list data stored by the normal operation will be described.

The evaluation operation is executed by the terminal evaluation operation unit 100B, the portal evaluation operation unit 200B, and the translation engine B, the translation engine C, and the translation engine D, which are alternative translation engines.

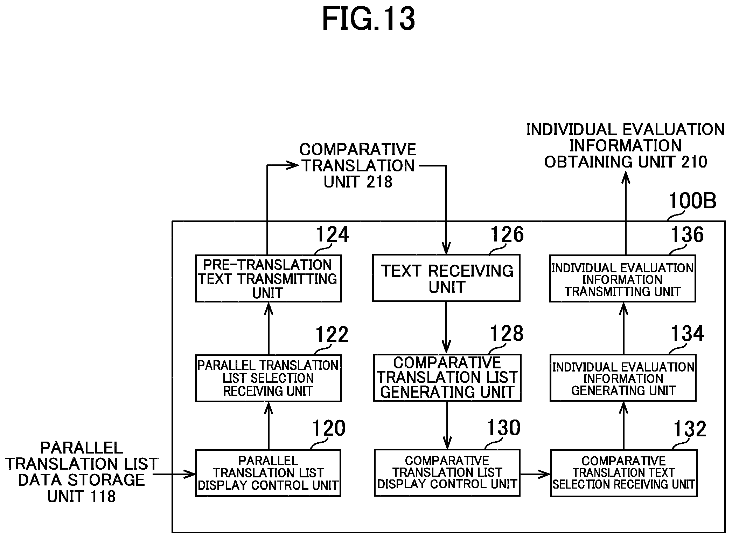

FIG. 13 is a detailed functional block diagram of a terminal evaluation operation unit 100B according to the present embodiment.

As shown in FIG. 13, the terminal evaluation operation unit 100B according to the present embodiment functionally includes, for example, a parallel translation list display control unit 120, a parallel translation list selection receiving unit 122, a pre-translation text transmitting unit 124, a text receiving unit 126, a comparative translation list generating unit 128, a comparative translation list display control unit 130, a comparative translation text selection receiving unit 132, an individual evaluation information generating unit 134, and an individual evaluation information transmitting unit 136. The parallel translation list display control unit 120, the parallel translation list selection receiving unit 122, the comparative translation list display control unit 130, and the comparative translation text selection receiving unit 132 are mainly implemented by the processor 100a and the touch panel 100e. The pre-translation text transmitting unit 124, the text receiving unit 126, and the individual evaluation information transmitting unit 136 are mainly implemented by the communication unit 100c. The comparative translation list generating unit 128 and the individual evaluation information generating unit 134 are mainly implemented by the processor 100a.

The functions described above are implemented when the processor 100a executes a program that is installed in the user terminal 100, which is a computer, and includes commands corresponding to the above functions. The program is supplied to the user terminal 100 via a computer-readable information storage medium, such as an optical disk, a magnetic disk, a magnetic tape, and a magneto-optical disk, or the Internet.

In this embodiment, the parallel translation list display control unit 120 obtains, for example, parallel translation list data generated by the normal operation from the parallel translation list data storage unit 118. The parallel translation list display control unit 120 generates a list of parallel translations associating pre-translation Japanese texts with post-translation English texts based on the parallel translation list data, and displays the list on the terminal 100.

As shown in FIG. 3, the parallel translation list display control unit 120 disposes the Japanese texts and the corresponding English texts in the parallel translation display areas 10a and 10b based on the parallel translation list, and generates the parallel translation list display screen 10.

The parallel translation list display control unit 120 controls the touch panel 100e to display the parallel translation list display screen 10.

The parallel translation list selection receiving unit 122 receives a selection from a plurality of parallel translations included in the list. The parallel translation list selection receiving unit 122 receives a selection of a parallel translation from the user when the user executes a selecting operation, such as tapping on the parallel translation display area 10, on the parallel translation list display screen 10 displayed on the touch panel 100e.

As shown in FIG. 4, the parallel translation list display control unit 120 generates a parallel translation confirmation screen 12 in which the parallel translation selected by the user and the parallel translation confirmation receiving button 12a are arranged, and displays the parallel translation confirmation screen 12a on the touch panel 100e.

The parallel translation list selection receiving unit 122 receives the selection of the parallel translation confirmation receiving button 12a on the parallel translation confirmation screen 12.

The parallel translation list display control unit 120 may display the comparative translation list display screen 14 shown in FIG. 5 without displaying the parallel translation confirmation screen 12 shown in FIG. 4 in response to the selection of the parallel translation list selection receiving unit 122.

When the parallel translation list selection receiving unit 122 receives the selection, the pre-translation text transmitting unit 124 transmits the Japanese text, which is the pre-translation text, to a comparative translation unit 218 to be described later of the portal evaluation operation unit 200B, and transmits the English text, which is the post-translation text, to the comparative translation list generating unit 128.

The text receiving unit 126 receives the English comparative post-translation text translated by the translation engine B, the translation engine C, and the translation engine D, which are alternative translation engines, from the comparative translation unit 218 to be described later of the portal evaluation operation unit 200B.

The text receiving unit 126 transmits the received comparative post-translation English text to the comparative translation list generating unit 128.

The comparative translation list generating unit 128 generates a comparative translation list based on the post-translation text received from the pre-translation text transmitting unit 124 and the comparative post-translation text received from the text receiving unit 126. The comparative translation list generating unit 128 then transmits the comparative translation list to the comparative translation list display control unit 130.

The comparative translation list display control unit 130 controls the terminal 100 to display the comparative post-translation text. In the present embodiment, for example, the comparative translation list display control unit 130 generates the comparative translation list display screen 14 shown in FIG. 5 and controls the touch panel 100e to display the comparative translation list display screen 14. The comparative translation list display screen 14 includes the post-translation text obtained by translating the Japanese text selected by the user on the screen in FIG. 4 by the translation engine A, and the comparative post-translation texts translated by the translation engine B, the translation engine C, and the translation engine D. In the present embodiment, as shown in FIG. 5, the comparative translation list display screen 14 randomly displays the comparative translation texts 14d, 14b, 14c, and 14a from the top.

The comparative translation list display control unit 130 may control the terminal 100 to display a list of randomly arranged comparative post-translation texts, respectively generated by the alternative translation engines. In this regard, the text displayed on the upper part of the list tends to be selected, and if one of the translation engines is always placed on the upper part, such translation engine may have high evaluation regardless of the content of the translation result. Such bias of the evaluation of the translation engine depending on the placement of the translation engines can be prevented in this manner.

The comparative translation text selection receiving unit 132 receives a selection of one of the comparative translation texts on the comparative translation list display screen 14. The user selects one comparative translation text by a selection operation, such as a tap, and determines the selection by the comparative translation text selection receiving button 14e.

The individual evaluation information generating unit 134 generates individual evaluation information in response to the selection on the comparative translation list display screen 14. The individual evaluation information may include a plurality of display IDs and selection IDs. The display ID is an identifier of the translation engine by which the comparative post-translation text to be displayed on the comparative translation list display screen 14 in the evaluating operation is translated. The selection ID is an identifier of the translation engine by which the post-translation text selected by the user from the comparative post-translation texts displayed on the comparative translation list display screen 14 is translated.

Referring to FIG. 5, an example in which the post-translation text 14d is selected will be described. As shown in FIG. 5, the comparative translation list display screen 14 shows the comparative post-translation texts translated by the translation engines A to D, and thus the display IDs are "0001" to "0004." In a case where the post-translation text 14d is selected, the post-translation text 14d is translated by the translation engine D, and thus the selection ID is "0004." As such, the display IDs "0001" to "0004" and the selection ID "0004" are generated as individual evaluation information.

The individual evaluation information transmitting unit 136 transmits the generated individual evaluation information to an individual evaluation information obtaining unit 210, which will be described later, of the portal evaluation operation unit 200B.

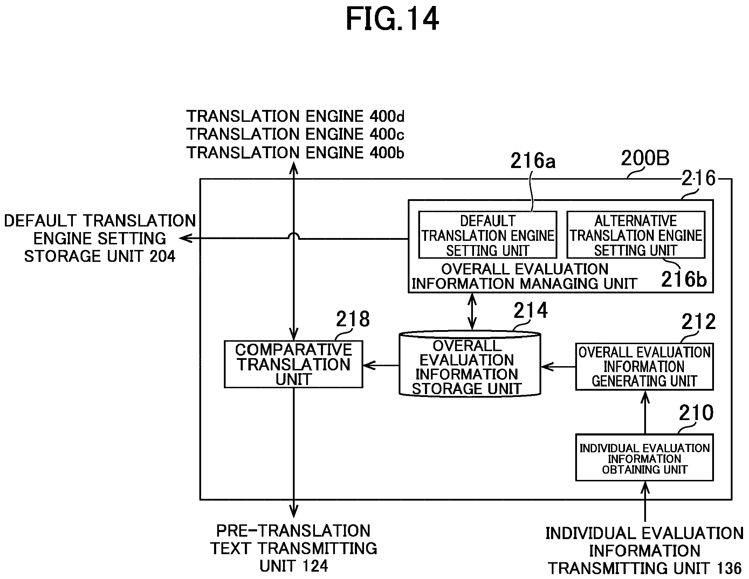

FIG. 14 is a detailed functional block diagram of the portal evaluation operation unit 200B according to the present embodiment.

As shown in FIG. 14, the portal evaluation operation unit 200B according to the present embodiment functionally includes, for example, an individual evaluation information obtaining unit 210, an overall evaluation information generating unit 212, an overall evaluation information storage unit 214, an overall evaluation information managing unit 216, and a comparative translation unit 218. The individual evaluation information obtaining unit 210 and the comparative translation unit 218 are mainly implemented by the communication unit 200c. The overall evaluation information storage unit 214 is mainly implemented by the storage unit 200b. The overall evaluation information generating unit 212 and the overall evaluation information managing unit 216 are mainly implemented by the processor 200a.

The above-described functions are implemented by executing, on the processor 200a, a program that is installed in the translation portal 200, which is a computer, and includes instructions corresponding to the above-described functions. The program is supplied to the user translation portal 200 via a computer-readable information storage medium, such as an optical disk, a magnetic disk, a magnetic tape, and a magneto-optical disk, or the Internet.

The individual evaluation information obtaining unit 210 receives, from the terminal evaluation operation unit 100B, individual evaluation information indicating the evaluation of the comparative post-translation text by the user of the terminal 100, and transmits the individual evaluation information to the overall evaluation information generating unit 212.

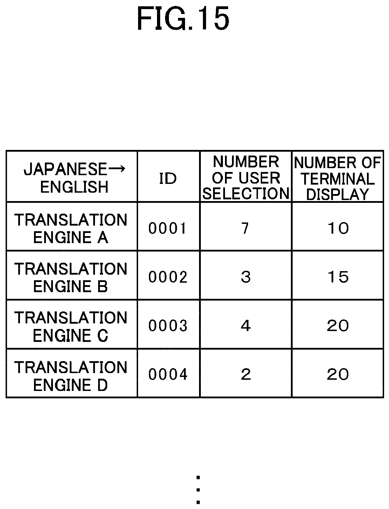

The overall evaluation information generating unit 212 generates overall evaluation information based on individual evaluation information related to each terminal 100. Specifically, the overall evaluation information generating unit 212 aggregates individual evaluation information from the plurality of terminals in the translation engine evaluation system 1, and generates the overall evaluation information shown in FIG. 15.

Assume that the individual evaluation information transmitted from the individual evaluation information obtaining unit 210 has display IDs "0001" to "0004" and a selected ID "0004." In this case, the number of times of terminal display of the translation engines A to D having identifiers "0001" to "0004", which are display IDs, is increased by 1. The number of times of user selection of the translation engine D having the identifier "0004", which is the selection ID, is increased by 1. That is, the number of times of terminal display is the total number of times the text translated by such a translation engine is displayed on the terminal 100 in the evaluation operation. Further, the number of times of user selection is the total number of times selected by the user when the comparative post-translation text translated by such a translation engine is displayed on the terminal 100 in the evaluation operation. In this manner, the individual evaluation information is aggregated, and the overall evaluation information as shown in FIG. 15 is generated. The generation of the overall evaluation information helps to grasp the popularity of each translation engine.

The overall evaluation information storage unit 214 stores the generated overall evaluation information.

The overall evaluation information managing unit 216 manages the overall evaluation information stored in the overall evaluation information storage unit 214. Specifically, the overall evaluation information managing unit 216 includes a default translation engine setting unit 216a and an alternative translation engine setting unit 216b. The default translation engine setting unit 216a changes the default translation engine related to the normal operation based on the overall evaluation information. The alternative translation engine setting unit 216b executes at least one of adding, changing, or deleting the alternative translation engine. The overall evaluation information managing unit 216 displays the overall evaluation information management screen 20 as shown in FIG. 6.

In the overall evaluation information management screen 20, items such as ID, the number of user selections, the number of terminal displays, defaults, and display candidates may be managed for each translation engine. For example, as shown in FIG. 6, the ID of the translation engine A is "0001", the number of user selections is seven, the number of terminal displays is ten, and the default and the display candidate are each one. These items are stored in association with one another.

The column of the default the overall evaluation information management screen 20 shown in FIG. 6 indicates which translation engine is the default translation engine. For example, in the example in FIG. 6, the translation engine A, which has a default value of 1, is the default translation engine.

The column of the display candidate in the overall evaluation information management screen 20 shown in FIG. 6 indicates whether to be selected as an alternative translation engine for translating the comparative post-translation text at the time of the evaluation operation. The translation engine having a value of 1 in this column is selected as an alternative translation engine for translating the comparative post-translation text. In the example in FIG. 6, the translation engine A, the translation engine B, the translation engine C, and the translation engine D are display candidates.

The default translation engine setting unit 216a changes the default translation engine. For example, the default translation engine may be changed by a predetermined operation of the administrator. In the present embodiment, the default translation engine may be changed by rewriting the value in the row of the default in the table of FIG. 6, for example. When the default translation engine is changed, the default translation engine setting unit 216a changes the setting of default translation engine of the default translation engine setting storage unit 204 related to the portal normal operation unit 200A.

In this manner, the default translation engine associated with the normal operation of the terminals 100 included in the translation engine evaluation system 1 can be changed.

The alternative translation engine setting unit 216b executes at least one of adding, changing, or deleting the alternative translation engine. The alternative translation engine setting unit 216b may change or delete the translation engine on the overall evaluation information management screen 20 by a predetermined operation of the administrator, for example. Changing the alternative translation engine is, for example, to change the translation engine D to a display candidate when the translation engine D is not a display candidate. Specifically, the translation engine D can be changed to the candidate of the alternative translation engine by changing the value of the display candidate from "0" to "1."

Deleting the alternative translation engine is, for example, to delete the translation engine D, which is a display candidate, from the candidates of the alternative translation engine. Specifically, the alternative translation engine can be deleted by changing the value of the display candidate of the translation engine D from "1" to "0."

For example, the alternative translation engine setting unit 216b may select a translation engine addition button 20a provided in a blank row in the table of the overall evaluation information management screen 20 so as to add a new translation engine. When a new translation engine is added, one more row may be added in the table. The name of the new translation engine may be displayed. The number of user selections, the number of terminal displays, and the default value may be respectively set to "0", and the value of the display candidate may be set to "1."

In this manner, when a new translation engine appears or when the translation engine that does not suit the user's preference needs to be deleted, the administrator can change the translation engine to be used as appropriate.

The comparative translation unit 218 causes the alternative translation engine to generate a comparative post-translation text obtained by translating the pre-translation Japanese text included in the selected parallel translation into English.

The comparative translation unit 218 determines the alternative translation engine from the translation engines, which are display candidates, based on the overall evaluation information of the overall evaluation information storage unit 214. For example, as shown in FIG. 6, the alternative translation engine is determined from among the translation engines having the value "1" of the display candidate.

The comparative translation unit 218 causes each of the alternative translation engines to generate a comparative post-translation text. In the present embodiment, for example, the comparative translation unit 218 determines that the translation engine B, the translation engine C, and the translation engine D, each having the value "1" of the display candidate, as the alternative translation engines.

The comparative translation unit 218 transmits the Japanese pre-translation text, which is received from the pre-translation text transmitting unit 124 related to the terminal evaluation operation unit 100B, to the translation engine B, the translation engine C, and the translation engine D, which are the determined as the alternative translation engines.

The comparative translation unit 218 causes the alternative translation engine to generate a comparative post-translation text in response to when the parallel translation list selection receiving unit 122 receives the selection. As such, the processing load of the system can be reduced as compared with the case where the pre-translation text is always translated by a plurality of alternative translation engines.

The comparative translation unit 218 transmits the English texts, which are the comparative post-translation texts received from the translation engine B, the translation engine C, and the translation engine D, to the text receiving unit 126 related to the terminal evaluation operation unit 100B.

The comparative translation unit 218 randomly selects an alternative translation engine from the plurality of alternative translation engines, and causes the selected alternative translation engine to generate a comparative post-translation text. Specifically, the comparative translation unit 218 may randomly determine an alternative translation engine from among the translation engines having the value "1" of the display candidate related to the overall evaluation information management screen 20. In this manner, the alternative translation engine is randomly determined, and thus a plurality of translation engines can be equally and appropriately evaluated.

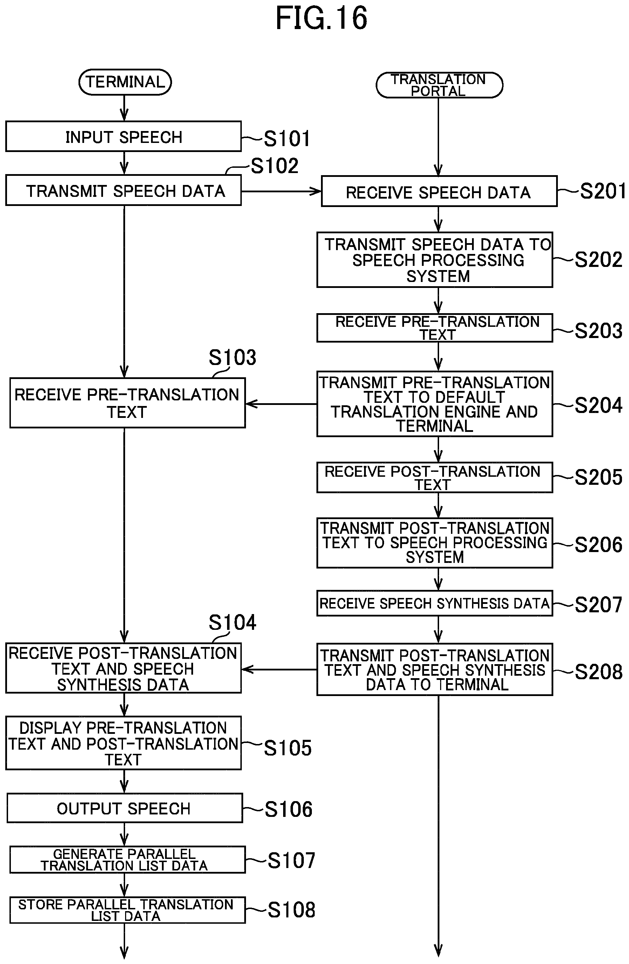

Referring to the flow chart shown in FIG. 16, an example of the processing for generating parallel translation list data of the normal operation executed by the terminal normal operation unit 100A and the portal normal operation unit 200A will be described. In this example, an embodiment will be described in which the speech entered in the terminal 100 is collectively transmitted to the default translation unit 202, although the speech may be sequentially transmitted.

In this example of the processing, the speech input receiving unit 104 of the terminal normal operation unit 100A receives a speech input (S101). When the speech input receiving unit 104 receives the speech input, the input transmitting unit 106 transmits speech data to the default translation unit 202 related to the portal normal operation unit 200A (S102).

The default translation unit 202 of the portal normal operation unit 200A receives the speech data (S201). The default translation unit 202 transmits the speech data to the speech recognition unit 302 of the speech processing system 300 (S202).

Subsequently, the default translation unit 202 receives a pre-translation text, which is a speech recognition result of the speech data transmitted from the speech recognition unit 302 in S202 (S203).

Upon receiving the pre-translation text from the speech recognition unit 302, the default translation unit 202 transmits the text to the translation engine A, which is the default translation engine, and the text receiving unit 108 of the terminal normal operation unit 100A (S204).

The text receiving unit 108 of the terminal normal operation unit 100A receives the pre-translation text (S103).

The default translation unit 202 of the normal operation unit 200A receives a post-translation text, which is obtained by translating the pre-translation text transmitted in S204 by the translation engine A (S205).

Upon receiving the post-translation text from the translation engine A, the default translation unit 202 of the portal normal operation unit 200A transmits the post-translation text received in S205 to the speech synthesizing unit 304 of the speech processing system 300 (S206).

The speech data relay unit 208 of the portal normal operation unit 200A receives speech synthesis data (S207). The speech data relay unit 208 then transmits the speech data to the speech data receiving unit 114 of the terminal normal operation unit 100A, and the default translation unit 202 transmits the post-translation text to the text receiving unit 108 of the terminal normal operation unit 100A (S208).

The text receiving unit 108 and the speech data receiving unit 114 of the terminal normal operation unit 100A each receive the post-translation text and the speech synthesis data (S104). The post-translation text display control unit 110 displays the pre-translation text and the post-translation text on the touch panel 100e (S105). The speech output unit 116 receives the speech synthesis data and then outputs the speech (S106).

The parallel translation list data generating unit 112 generates parallel translation list data based on the pre-translation text and the post-translation text received in S103 and S104 (S107) .

The parallel translation list data storage unit 118 stores the parallel translation list data generated by the parallel translation list data generating unit 112 in S107 (S108), and the processing in this example is terminated.

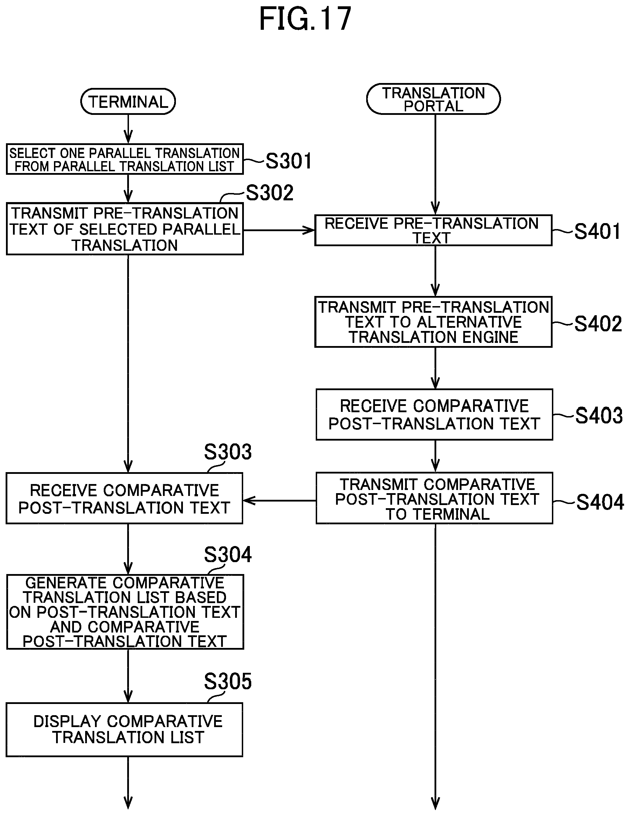

Next, referring to the flow chart shown in FIG. 17, an example of processing for generating a comparative translation list of the evaluation operation executed by the terminal evaluation operation unit 100B and the portal evaluation operation unit 200B will be described. This processing starts when the parallel translation list display screen 10 generated based on the parallel translation list data stored in the processing of S108 is displayed on the touch panel 100e of the terminal 100.

The parallel translation list selection receiving unit 122 receives the user's selection of one of parallel translations on the parallel translation list display screen 10 (S301).

After the selection of one of the translations is received, the pre-translation text transmitting unit 124 transmits the pre-translation text to the comparative translation unit 218 (S302) .

The comparative translation unit 218 of the translation portal receives the pre-translation text (S401).

Upon receiving the pre-translation text, the comparative translation unit 218 of the translation portal transmits the pre-translation text to the alternative translation engine that is determined based on the overall evaluation information of the overall evaluation information storage unit 214 (S402).

The comparative translation unit 218 receives the comparative post-translation text from the alternative translation engine (S403). Further, the comparative translation unit 218 transmits the received comparative post-translation text to the text receiving unit 126 of the terminal evaluation operation unit 100B (S404).

The text receiving unit 126 of the terminal evaluation operation unit 100B receives the comparative post-translation text from the comparative translation unit 218 (S303).

The comparative translation list generating unit 128 generates a comparative translation list based on the post-translation text received from the pre-translation text transmitting unit 124 and the comparative post-translation text received from the text receiving unit 126 (S304).

The comparative translation list display control unit 130 displays the comparative translation list generated by the comparative translation list generating unit 128 on the touch panel 100e of the terminal 100 (S305), and the processing in this example is terminated.

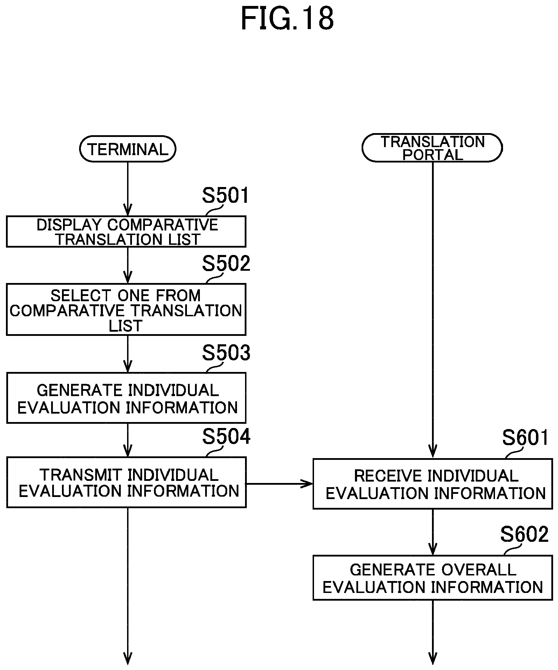

Next, referring to the flow chart shown in FIG. 18, an example of processing for generating the overall evaluation information of the evaluation operation executed by the terminal evaluation operation unit 100B and the portal evaluation operation unit 200B will be described.

The comparative translation list display control unit 130 of the terminal evaluation operation unit 100B generates a comparative translation list display screen 14 based on the comparative translation list generated in S304, and displays the comparative translation list display screen on the touch panel 100e of the terminal 100 (S501).

The comparative translation text selection receiving unit 132 receives one of the comparative translation texts selected from the comparative translation list (S502).

The individual evaluation information generating unit 134 then generates individual evaluation information in response to the selection of the comparative translation text selection receiving unit 132 (S503).

The individual evaluation information transmitting unit 136 transmits the individual evaluation information generated by the individual evaluation information generating unit 134 in S503 to the individual evaluation information obtaining unit 210 of the portal evaluation operation unit 200B (S504).

The individual evaluation information obtaining unit 210 of the portal evaluation operation unit 200B receives the individual evaluation information from the individual evaluation information transmitting unit 136 (S601).

The overall evaluation information generating unit 212 generates overall evaluation information based on the received individual evaluation information (S602).

The overall evaluation information storage unit 214 stores the overall evaluation information (S603), and the processing in this example is terminated.

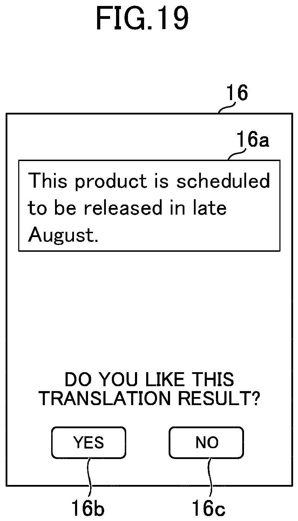

In the present embodiment, a comparative post-translation text display screen 16 of FIG. 19 is shown as a modification of the comparative translation list display screen 14 of FIG. 5. The comparative post-translation text display screen 16 includes an English text 16a in which a Japanese text is translated by one alternative translation engine, and comparative post-translation text selection receiving buttons 16b to 16c. When the user selects one of the comparative post-translation text selection receiving buttons 16b to 16c, the individual evaluation information generating unit 134 related to the terminal evaluation operation unit 100B generates individual evaluation information.

When the comparative post-translation text display screen 16 is displayed, the individual evaluation information may be the ID of the alternative translation engine that translates the comparative post-translation text 16a and indicate which one of the comparative post-translation text selection receiving buttons 16b to 16c has been selected.

The present invention is not limited to the embodiment described above. In the present embodiment, the translation engine that translates Japanese into English is described, although the translation engine of the other language pairs can be evaluated in the same manner.

For example, the roles of the terminal 100, the translation portal 200, the speech processing system 300, and the translation engine 400 are not limited to those described above. For example, a speech recognition result text (pre-translation text) may not have to go through the translation portal 200 when the speech processing system 300 executes the translation processing of the speech recognition result text.

For example, the functions of the terminal 100 may be implemented in a computer other than the dedicated terminal.

The specific texts, numerical values, and specific texts and numerical values in the drawings described above are illustrative only, and are not limited to these texts and numerical values.

## Claims

1. A translation engine evaluation system (1) comprising:
default translation means (202) for causing a default translation engine to translate a pre-translation text into a second language to generate a post-translation text, the pre-translation text representing a speech in a first language entered in a terminal (100);
post-translation text display control means (110) for displaying the post-translation text on the terminal (100);
parallel translation list display control means (120) for displaying a list of a plurality of parallel translations, in which the pre-translation text and the post-translation text are associated with each other, on the terminal (100);
selection receiving means (122) for receiving a selection of a parallel translation from the plurality of parallel translations included in the list;
comparative translation means (218) for causing an alternative translation engine to translate the pre-translation text included in the selected parallel translation into the second language to generate a comparative post-translation text;
comparative post-translation text display control means (130) for displaying the comparative post-translation text on the terminal (100); and
individual evaluation information obtaining means (210) for obtaining individual evaluation information indicating evaluation of a user of the terminal (100) on the comparative post-translation text.

2. The translation engine evaluation system (1)according to claim 1, wherein
upon receiving the selection, the comparative translation means (218) causes the alternative translation engine to generate the comparative post-translation text.

3. The translation engine evaluation system (1) according to claim 1, wherein
the comparative translation means (218) causes each of the plurality of alternative translation engines to generate the comparative post-translation text, and
the comparative post-translation text display control means (130) displays a list, in which the plurality of comparative post-translation texts that are respectively generated by the plurality of alternative translation engines are randomly arranged, on the terminal.

4. The translation engine evaluation system (1) according to claim 1, wherein
the comparative translation means (218) causes the alternative translation engine that is randomly selected from the plurality of alternative translation engines to generate the comparative post-translation text.

5. The translation engine evaluation system (1) according to claim 1, wherein
the default translation engine translates the pre-translation text into the second language to generate the post-translation text for each of the plurality of terminals (100), the pre-translation text indicating a speech in the first language entered in the terminal (100), and
the translation engine evaluation system further includes default translation engine changing means (216a) for changing the default translation engine.

6. The translation engine evaluation system (1) according to claim 1, further comprising alternative translation engine setting means (216b) for executing at least one of adding, changing, or deleting the alternative translation engine.

7. The translation engine evaluation system (1) according to claim 1, further comprising overall evaluation information generating means (212) for generating overall evaluation information based on the individual evaluation information related to each of the plurality of terminals (100).

8. A translation engine evaluation method comprising:
causing a default translation engine to translate a pre-translation text into a second language to generate a post-translation text, the pre-translation text representing a speech in a first language entered in a terminal (100);
displaying the post-translation text on the terminal (100) ;
displaying a list of a plurality of parallel translations, in which the pre-translation text and the post-translation text are associated with each other, on the terminal (100);
receiving a selection of a parallel translation from the plurality of parallel translations included in the list;
causing an alternative translation engine to translate the pre-translation text included in the selected parallel translation into the second language to generate a comparative post-translation text;
displaying the comparative post-translation text on the terminal (100); and
obtaining individual evaluation information indicating evaluation of a user of the terminal on the comparative post-translation text.
